# EUROPEAN PATENT SPECIFICATION

(11) **EP 4 566 494 B1**
(45) Date of publication and mention of the grant of the patent: **09.12.2026**
(21) Application number: 24186985.8
(22) Date of filing: 07.07.2024
(51) Int. Cl.: A47J 37/06, A47J 27/04

(54) **A NEW TYPE OF DUAL-CHAMBER STEAM AIR FRYER**
EINE NEUE ART VON ZWEIKAMMER-DAMPF-LUFT-FRITTEUSE
UN NOUVEAU TYPE DE FRITEUSE À VAPEUR ET À AIR À DOUBLE CHAMBRE

(30) Priority: 08.12.2023 CN 202323351514 U
(43) Date of publication of application: 11.06.2025
(73) Proprietor: Zhejiang Biyi Electric Appliance Co., Ltd., Yuyao, Zhejiang 315400 (CN)
(72) Inventor: MAN, Kaimong, Yuyao, 315400 (CN); LOU, Hongxian, Yuyao, 315400 (CN); ZANG, Hao, Yuyao, 315400 (CN)
(74) Representative: ZHAOffice SPRL

(56) References cited:
- CN-A- 115 076 732
- CN-U- 213 309 186
- CN-U- 215 226 902
- CN-U- 217 137 636
- CN-U- 218 128 066
- US-A1- 2021 121 011

## Description

### Technical Field

The patent relates to a steam air fryer, specifically a new type of dual-chamber steam air fryer.

### Background Art

The steam air fryer is a household appliance that combines the functions of an air fryer and a steam oven. The air fryer uses high-speed air circulation technology to fry food, resulting in food with 80% less fat compared to traditional deep fryers. It is easy to clean, safe, and economical, making it popular among consumers. Some air fryers have a steam function, such as the one disclosed in Chinese Patent Document with application number 202110774047.3, granted on December 30, 2022, titled "A Steam Air Fryer with Circulation Channel." Others adopt a dual-chamber structure, like the one disclosed in Chinese Patent Document with application number 202010692094.9, published on January 18, 2022, titled "Air Fryer." However, these products and similar ones have poor internal sealing structure design, especially the sealing structure above the inner pot, resulting in inconvenient production and assembly, poor sealing effect, and high production cost.

CN 213 309 186 U relates to an air fryer with high cooking efficiency. An existing air fryer is small in number of cooking cavities and single in cooking mode, and use experience is affected. The cooking cavity is provided with a hot air assembly and a fryer assembly, the hot air assembly comprises a fan and a heating pipe, hot air generated by the hot air assembly flows downwards into the fryer assembly to cook food materials, the two cooking cavities are arranged on the side portion of the shell, a steam generating assembly is arranged in the shell, and the steam generating assembly is at least communicated with one cooking cavity. And steam generated by the steam generating assembly is input into the corresponding cooking cavity.

CN 215 226 902 U relates to a novel steam fryer, comprising a machine body of the steam fryer comprising a fryer body and a machine head, an inner pot and a water tank are arranged in the fryer body, a water pump, a steam generator, a plastic cross-flow fan blade, a motor, an exhaust assembly and a circuit board are arranged in the machine head on the top of the inner pot, the machine head is further provided with a heating element and a hardware centrifugal fan blade, and the fryer body and the machine head are hinged to be opened through one side of the water tank. The steam cooker is characterized in that the heating element is a quartz tube, a heating wire in the quartz tube is carbon fiber, a hose of the water tank is connected with a steam generator through a water pump, a hose of the steam generator is connected with a steam nozzle through the water pump, and a nozzle opening of the steam nozzle is located in a cooker opening of the inner cooker. The quartz tube extends into a top opening of the inner pot through the pot cover, the pot cover is arranged at the opening of the inner pot, a silica gel sealing ring is arranged on the outer diameter of the opening of the pot cover, and an exhaust port of the pot cover extends out of the machine head.

CN 218 128 066 U discloses a steam cooking device convenient to clean, which comprises a cooking device, and a cooking cavity is arranged in the cooking device. The water tank is detachably arranged on the cooking device and comprises a water tank base assembly and a water tank cover assembly detachably arranged on the water tank base assembly, a water containing cavity is formed in the water tank base assembly, a heating piece is arranged in the water containing cavity, and the water tank cover assembly comprises a water tank cover and a steam guide cover arranged on the inner side of the water tank cover. The steam guide cover covers the upper side of the water containing cavity and is provided with a first steam guide channel, the water tank base assembly is provided with a second steam guide channel, and the first steam guide channel is communicated with the second steam guide channel. Hot steam generated by the heating piece in the water containing cavity is communicated with a cooking cavity in the cooking device through the first steam guide channel and the second steam guide channel.

US 2121/121 011 A1 discloses a cooking system including a housing defining a hollow chamber configured to receive food. The housing has an upper portion defining an opening to said hollow chamber. A lid is movable relative to the housing between an open position and a closed position. The lid seals the opening to the hollow chamber when in the closed position. A portion of the lid is selectively positionable to form a pressure-tight heating volume between the hollow chamber and the portion of said lid. At least one heating element is associated with at least one of the housing and the lid. The at least one heating element is arranged within the pressure-tight heating volume.

CN 115 076 732 A discloses a double-cavity integrated stove which comprises a cabinet body, a stove and a range hood head, wherein the stove and the range hood head are arranged on the cabinet body; the cabinet body comprises a front installation area and a rear installation area. A fan communicated with the range hood head and a flue communicated with the fan are arranged in the rear mounting area; a first middle-layer plate is arranged in the front mounting area, and the front mounting area is divided into an upper mounting area and a lower mounting area by the first middle-layer plate; a cavity assembly is accommodated in the lower mounting area and comprises a left cavity and a right cavity which are arranged left and right; a water tank, a steam generation module and a hot air generation module are arranged in the upper mounting area. The front installation area of the cabinet body is divided into the upper installation area and the lower installation area through the first middle layer plate, the left cavity and the right cavity are formed in the lower installation area, and the double-cavity cooking function is achieved; the water tank, the steam generation module and the hot air generation module are arranged in the upper mounting area.

### SUMMARY OF THE INVENTION

To overcome the above deficiencies, the objective of the patent is to provide a new type of dual-chamber steam air fryer that addresses the poor internal sealing structure design of existing similar products, especially the poor sealing structure above the inner pot, which leads to inconvenient production and assembly, poor sealing effect, and high production cost. The objective is achieved through the following technical solution. The invention is as set out in the appended set of claims.

A new type of dual-chamber steam air fryer, characterized by a top cover on the body of the fryer, with dual chambers on one side of the body, each corresponding to a pan assembly with a pot. The top of the body has a first water tank, or the bottom has a second water tank. The first or second water tank is connected to the steam generator, water pump, and steam nozzle inside the body through a silicone hose. The steam nozzle is located on one side of the stainless steel heat-insulating inner layer above the pot. The design compromises: the stainless steel heat-insulating inner layer is set on both sides of the pot, with sealing rings at lower side of the heat-insulating inner layer. The ends of the sealing rings protrude above the stainless steel heat-insulating inner layer, sealing against the edge of the pot. This design a relatively sealed space with the pot. Unlike existing products, which mainly seal at the door frame, this steam air fryer only requires the upper chamber materials to be anti-rust, achievable with stainless steel heat-insulating inner layers, reducing the use of stainless steel parts and production costs. Existing products require all chamber materials to be anti-rust, resulting in higher production costs.

The sealing ring at the opening of the stainless steel heat-insulating inner layer above the pot in the body has a 1-3mm gap reserved at the edge of the pot's mouth.

The pan assemblies comprises an outer pot and an inner pot or a tray, together with the sealing ring underneath the stainless steel heat-insulating inner layer, formed a relatively sealed space. Above the pot, there are heaters and metal fan blades, which are positioned above the heaters. Above the stainless steel heat-insulating inner layer are air guide chambers, each containing plastic centrifugal fan blades. Above the air guide chamber are motors, whose drive shafts are connected to the metal fan blades and plastic fan blades. Each of the air guide chamber's air outlet end is connected to the exhaust outlet of the air fryer housing; there is also an air outlet port on each side of the heat-insulating inner layer, this port is below the air guide chamber, and also connected to the exhaust outlet of the air fryer housing, Above is the main structure of air system with dual fan blades.

The steam nozzle is located under the stainless steel heat-insulating inner layer, adjacent to the-heater.

The pan assemblies can be the same or different sizes, consist of an outer pot and an inner pot, or an outer pot and a tray. Each equipped with handles on the outer side of the covers.

The structure of the claimed patent has simplified structure, easy for production-assembly, with good sealing effect, and low cost. It is primarily used as a new type of dual-chamber steam air fryer and as an improvement in the structure of similar products.

### ACCOMPANYING DRAWINGS

Figure 1: Schematic diagram of the internal structure of the upper section of the device, without showing the top cover of the body.
Figure 2: Schematic diagram of the lower side of the upper section of the device as shown in Figure 1.
Figure 3: External structure of the device.
Figure 4: Cross-sectional view of the complete device, with section A framed-
Figure 5: Enlarged diagram of section A in Figure 4.

Reference Numerals and Names: 1, Steam Generator, 2, Water Pump, 3, Steam Nozzle, 4, Sealing Ring, 5, First Water Tank, 6, Second Water Tank, 7, Air Guide chamber, 8, Motor, 9, Plastic Centrifugal Fan Blade,10, Metal Fan Blade, 11, Stainless Steel Heat-Insulating Inner Layer, 12, Heater, 13, Inner Pot, 14, Outer Pot.

### EMBODIMENTS

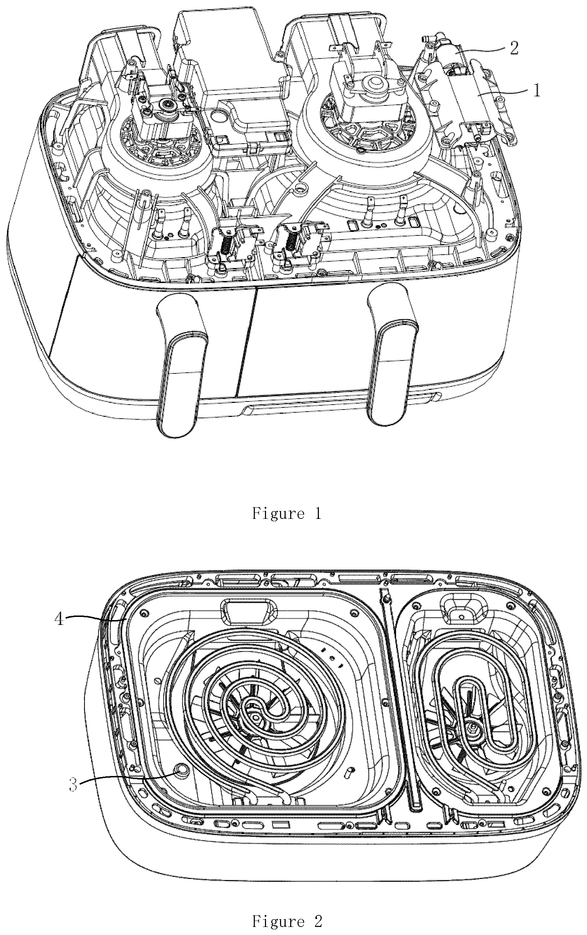

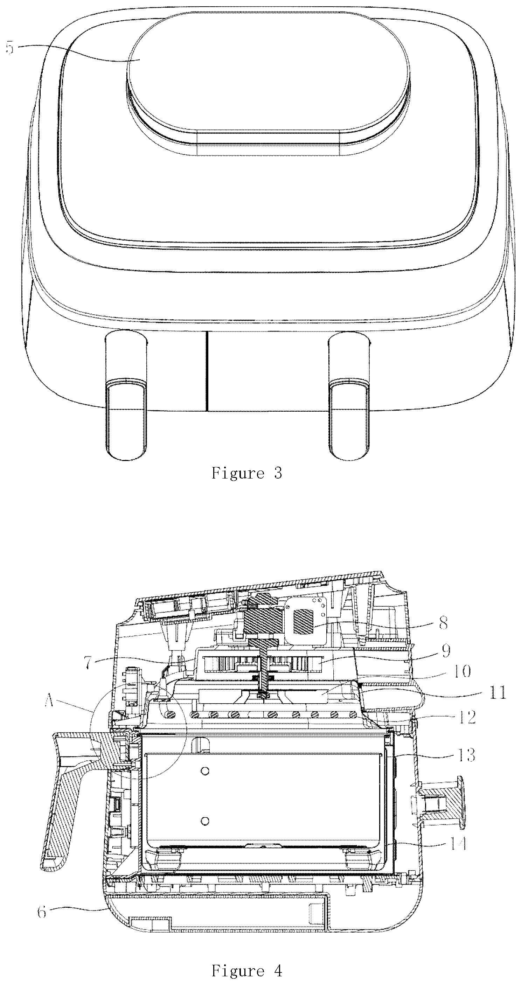

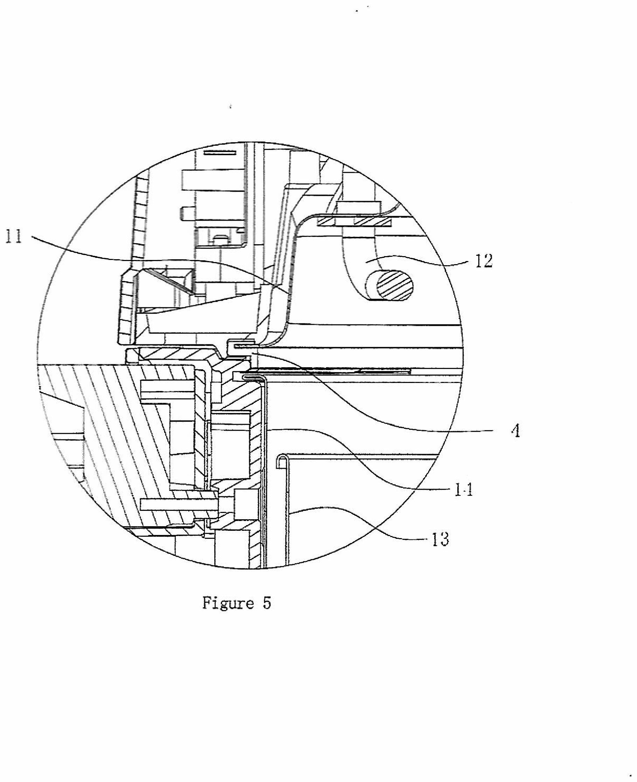

The structure and usage of the patent will be further described with reference to the drawings. As shown in Figures 1-5, the body of the steam air fryer is equipped with a top cover, with dual chambers on one side of the body, each corresponding to a pan assembly, each equipped with a pot and a handle on the outer side of the cover. The top of the body has a first water tank 5, or the bottom has a second water tank 6, connected to the steam generator1, water pump 2, and steam nozzle3 inside the body through a silicone hose. The steam nozzle is located below a stainless steel heat-insulating inner layer 11 above the pot. The stainless steel heat-insulating inner layer is fixing sealing rings 4 at its lower side. The ends of the sealing rings protrude above stainless steel heat-insulating inner layer, sealing against the rim of the pot.

The sealing ring fixed on the stainless steel heat-insulating inner layer above the pot has a 1-3mm gap with the pot. The pan assembly consists of an outer pot14 and an inner pot 13 or a crispy tray,-and the inner pot or the tray is placed inside the outer pot. The stainless steel heat-insulating inner layer is equipped with heters12 and metal fan blades 10, which are positioned above the heaters. The top of the stainless steel heat-insulating inner layer inside the body is equipped with air guide chambers7, each containing plastic centrifugal fan blades9. Above the air guides are shaded pole motors8, whose drive shafts are connected to both the plastic and metal fan blades. Each of the air guide chamber's air outlet end is connected to the exhaust outlet of the air fryer housing; there is also an air outlet port on each side of the heat-insulating inner layer, this port is below the air guide chamber, and also connected to the exhaust outlet of the air fryer housing The steam nozzle is located below the stainless steel heat-insulating inner layer, adjacent to heater.

When in use, by pressing the control panel buttons, the steam nozzle inside the body releases steam according to the programmed settings to cook food inside the pot with pure steam. The heaters, plastic centrifugal fan blades, and metal fan blades operate according to the programmed settings to cook the food inside the pot with,hot air, or a combination of steam and hot air for steam roasting. This steam air fryer thus has three major functions: pure steaming, steam roasting, and air frying.

## Claims

1. A dual-chamber steam air fryer, wherein the top of the fryer body is provided with a top cover, an opening on one side of the body housing and corresponding frying pan or pan assemblies are respectively placed at the opening, the top of the body being equipped with a first water tank (5), or the bottom of the body being equipped with a second water tank (6), the first or second water tank being connected to a steam generator (1), water pump (2), and steam nozzle (3) inside the body via hoses, **characterized in** the steam nozzle being located on one side of stainless steel heat insulating inner layers (11) above the pot, sealing rings (4) are located underneath the stainless steel heat-insulating inner layers (11), the sealing rings protruding above the stainless steel heat-insulating inner layers and forming a sealed chamber with the pans while a 1-3 mm space is left between each sealing ring and the upper rim of its corresponding pot, the hoses being silicone hoses.

2. The dual-chamber steam air fryer according to claim 1, comprising a pan assembly which comprises an outer pot (14) and an inner pot (13) or a tray(15), the ends of the sealing rings (4) being placed above the rim of the outer pot and forming a relatively sealed space.

3. The dual-chamber steam air fryer according to any of the preceding claims, comprising heaters (12) and metal fan blades (10),which are respectively provided under the stainless steel heat-insulating inner layers (11) above the pot, the metal fan blades being positioned above the heaters, the top of the stainless steel heat-insulating inner layers inside the body being respectively provided with air guide chambers (7), the air guide chambers being each equipped with plastic centrifugal fan blades (9), the tops of the air guide chambers being respectively provided with motors (8), and the shaft of the motors being respectively connected to both the plastic and metal fan blades, the upper exhaust port on one side of the air guide chamber and the lower exhaust port on one side of the stainless steel heat-insulating inner layers being respectively connected to the body's air outlet, which is provided with an air outlet cover.

4. The dual-chamber steam air fryer according to any of the preceding claims, comprising a steam nozzle (3) ,which is placed under the stainless steel heat-insulating inner layers (11), beside the heater(12).

5. The dual-chamber steam air fryer according to any of the preceding claims, being provided with pan assemblies, which are of the same or different sizes, and with handles respectively provided on the outer sides.

## Patentansprüche

1. Zweikammer-Dampf-Luft-Fritteuse, wobei das Oberteil des Fritteuse-Körpers mit einem Oberdeckel, mit einer Öffnung auf einer Seite des Körpergehäuses versehen ist, und entsprechende Fritteuse-Pfanne oder Pfannenmontagen jeweils auf der Öffnung angeordnet sind, wobei das Oberteil des Körpers mit einem ersten Wasserbehälter (5) ausgerüstet ist, oder der Boden des Körpers mit einem zweiten Wasserbehälter (6) ausgerüstet ist, wobei der erste oder der zweite Wasserbehälter mit einem Dampferzeuger (1), einer Wasserpumpe (2), und einer Dampfdüse (3) innerhalb des Körpers über Schläuche verbunden ist, wobei die Dampfdüse auf einer Seite von wärmedämmenden Edelstahlinnenschichten (11) über dem Topf gelegen ist, **dadurch gekennzeichnet, dass** Dichtungsringe (4) unter den wärmedämmenden Edelstahlinnenschichten (11) gelegen sind, wobei die Dichtungsringe über den wärmedämmenden Edelstahlinnenschichten (11) herausragen und eine abgedichtete Kammer mit den Pfannen bilden, während ein Abstand von 1-3 mm zwischen jedem Dichtungsring und dem Oberrand seines entsprechenden Topf gelassen wird, wobei die Schläuche Silikonschläuche sind.

2. Zweikammer-Dampf-Luft-Fritteuse nach Anspruch 1, umfassende eine Pfannenmontage, die einen Außentopf (14) und einen Innentopf (13) oder eine Schale (15) umfasst, wobei die Enden der Dichtungsringe (4) über dem Rand des Außentopfes (13) gelegt sind und einen relativ abgedichteten Raum bilden.

3. Zweikammer-Dampf-Luft-Fritteuse nach einem der vorhergehenden Ansprüche, umfassende ein Heizgerät (12) und metallische Ventilatorflügel (10), die jeweils unter den wärmedämmenden Edelstahlinnenschichten (11) über dem Topf vorgesehen sind, wobei die metallischen Ventilatorflügel (10) über den Heizgeräten aufgestellt sind, wobei das Oberteil der wärmedämmenden Edelstahlinnenschichten (11) innerhalb des Körpers jeweils mit Luftführungskammern (7) ausgestattet sind, die Luftführungskammern (7) jede mit aus Kunststoff gefertigten Ventilatorflügeln (9) ausgestattet sind, die Oberteile der Luftführungskammer jeweils mit Motoren (8) versehen sind, und die Welle der Motoren jeweils mit den beiden aus Kunststoff gefertigten Ventilatorflügeln und den metallischen Ventilatorflügeln verbunden sind, wobei die obere Auslassöffnung an einer Seite der Luftführungskammer und die untere Auslassöffnung an einer Seite der wärmedämmenden Edelstahlinnenschichten jeweils mit dem Körperluftauslass, der mit einer Luftauslassdeckel versehen ist, verbunden sind.

4. Zweikammer-Dampf-Luft-Fritteuse nach einem der vorhergehenden Ansprüche, umfassende eine Dampfdüse (3), die unter den wärmedämmenden Edelstahlinnenschichten (11) neben dem Heizgerät (12) gelegt ist.

5. Zweikammer-Dampf-Luft-Fritteuse nach einem der vorhergehenden Ansprüche, wobei sie mit Pfannenmontagen versehen ist, die gleiche oder verschiedene Abmessungen aufweisen, und jeweils mit Handgriffen auf den Außenseiten versehen sind.

## Revendications

1. Friteuse à vapeur et à air à double chambre, dans laquelle la partie supérieure du corps de friteuse est pourvue d'un couvercle supérieur, d'une ouverture sur un côté du boitier du corps, et la poêle à frire ou assemblages de poêle à frire correspondants sont placés respectivement à l'ouverture, la partie supérieure du corps étant équipée d'un premier réservoir d'eau (5), ou le fond du corps étant équipé d'un deuxième réservoir d'eau (6), le premier réservoir d'eau (5) ou le deuxième réservoir d'eau (6) étant raccordé à un générateur de vapeur (1), à une pompe à eau (2) et à un embout de vapeur (3) à l'intérieur du corps par l'intermédiaire de flexibles, l'embout de vapeur étant situé sur un côté des couches intérieures thermo-isolantes en acier inoxydable (11) au-dessus du pot, **caractérisée en ce que** des bagues d'étanchéité (4) sont situées au-dessous des couches intérieures thermo-isolantes en acier inoxydable (11), les bagues d'étanchéité (4) saillant au-dessus des couches intérieures thermo-isolantes en acier inoxydable (11) et formant une chambre étanche avec les poêles pendant qu'un espace de 1-3 mm est laissé entre chaque bague d'étanchéité et le bord supérieur du pot correspondant, les flexibles étant des flexibles en silicone.

2. Friteuse à vapeur et à air à double chambre selon la revendication 1, comprenant un assemblage de poêles qui comprend un pot extérieur (14) et un pot intérieur (13) ou un plateau (15), les extrémités des bagues d'étanchéité étant placées au-dessus du bord du pot extérieur et formant un espace relativement étanche.

3. Friteuse à vapeur et à air à double chambre selon l'une quelconque des revendications précédentes, comprenant des dispositifs de chauffage (12) et des pales de ventilateur métalliques (10), qui sont prévues respectivement au-dessous des couches intérieures thermo-isolantes en acier inoxydable (11) au-dessus du pot, les pales de ventilateur métalliques (10) étant positionnées au-dessus des dispositifs de chauffage, la partie supérieure des couches intérieures thermo-isolantes en acier inoxydable (11) à l'intérieur du corps étant respectivement pourvues de chambres de guidage d'air (7), les chambres de guidage d'air (7) étant chacune équipée de pales de ventilateur centrifuge en matière synthétique (9), les parties supérieures des chambres de guidage d'air (7) étant respectivement pourvues de moteurs (8), et l'arbre des moteurs étant respectivement raccordé à la fois aux pales de ventilateur métallique et en matière synthétique, l'orifice d'échappement supérieur sur un côté de la chambre de guidage d'air et l'orifice d'échappement inférieur sur un côté des couches intérieures thermo-isolantes en acier inoxydable étant respectivement raccordés à la sortie d'air du corps , qui est pourvu d'un couvercle de sortie d'air du corps.

4. Friteuse à vapeur et à air à double chambre selon l'une quelconque des revendications précédentes, comprenant un embout de vapeur (3), qui est placé au-dessous des couches intérieures thermo-isolantes en acier inoxydable (11) à côté du dispositif de chauffage (12).

5. Friteuse à vapeur et à air à double chambre selon l'une quelconque des revendications précédentes, pourvue d'assemblages de poêles présentant des dimensions identiques ou différentes, et de poignées prévues respectivement des deux côtés extérieurs.
